# EUROPÄISCHE PATENTSCHRIFT

(11) **EP 3 265 775 B1**
(45) Veröffentlichungstag und Bekanntmachung des Hinweises auf die Patenterteilung: **08.05.2019**
(21) Anmeldenummer: 16707446.7
(22) Anmeldetag: 02.03.2016
(51) Int. Cl.: G01N 1/28, G01N 1/44, G01N 23/223, G01N 23/22

(54) **VERFAHREN ZUR HERSTELLUNG EINER EIN PROBENMATERIAL UMFASSENDEN TABLETTE**
METHOD FOR PRODUCING A TABLET WHICH COMPRISES A SAMPLE MATERIAL
PROCÉDÉ DE FABRICATION D'UNE PASTILLE COMPRENANT UN MATÉRIAU ÉCHANTILLON

(30) Priorität: 05.03.2015 DE 102015103192
(43) Veröffentlichungstag der Anmeldung: 10.01.2018
(73) Patentinhaber: thyssenkrupp Industrial Solutions AG, 45143 Essen (DE); thyssenkrupp AG, 45143 Essen (DE)
(72) Erfinder: TEUTENBERG, Reinhard, 59423 Unna (DE); SCHNEBERGER, Jürgen, 59320 Ennigerloh (DE); BORNEFELD, Marc, 33617 Bielefeld (DE); MAIER, Oliver, 48167 Münster (DE)
(74) Vertreter: thyssenkrupp Intellectual Property GmbH
(86) Internationale Anmeldenummer: PCT/EP2016/054411
(87) Internationale Veröffentlichungsnummer: WO 2016/139240

(56) Entgegenhaltungen:
- WO-A1-2015/000571
- DE-A1- 2 021 667
- DE-A1- 2 216 035
- DE-A1- 4 428 920

## Beschreibung

Die Erfindung betrifft ein Verfahren zur Herstellung einer ein Probenmaterial umfassenden Tablette, die für eine Verwendung bei einer Analyse des Probenmaterials vorgesehen ist.

Es ist bekannt, derartige Tabletten als Presstabletten in der Weise herzustellen, dass das Probenmaterial gemahlen und unter Anwendung von Druck und/oder Bindemittel zur Tablette weiterverarbeitet wird. Ein Verfahren dieser Art setzt voraus, dass das Probenmaterial vor dem Mahlen bereits in einer für die fertige Tablette geeigneten stofflichen Konsistenz vorliegt.

Es ist ferner bekannt, derartige Tabletten aus einer Schmelze herzustellen. Dabei wird das Probenmaterial mit einem Schmelzmittel vermischt, diese Probenmaterial-Schmelzmittel-Mischung aufgeschmolzen und die Schmelze in eine Tablettenform gegossen und darin abgekühlt. Ein solches Abkühlen unter gleichzeitiger Formgebung ist jedoch verfahrenstechnisch sowie in apparativer Hinsicht aufwändig. So muss die Abkühlung einer Schmelztablette unter sehr kontrollierten Bedingungen erfolgen, da ein zu rasches Abkühlen zum Brechen der Tablette führen kann, während bei einem zu langsamen Abkühlen die Schmelze kristallisieren würde, wodurch die Tablette ebenfalls ihre Festigkeit verlieren würde.

Aus der WO 2015/000571 A1 und aus der US 5,257,302 sind jeweils Verfahren zur Herstellung einer ein Probenmaterial umfassenden Tablette bekannt, bei denen eine das Probenmaterial umfassende Materialmischung aufgeschmolzen und wieder abgekühlt wird. Das so entstandene, glasige Material wird anschließend gemahlen und daraufhin zu der Tablette verpresst.

Die DE 44 28 920 A1 offenbart ein Verfahren zur Herstellung einer Materialprobe für eine Röntgenfluoreszenzanalyse, bei dem grobgemahlenes Probenmaterial, gegebenenfalls nach einem Vermischen mit einem Schmelzmittel, zu einer tablettenförmigen Probe gepresst und der für die Röntgenfluoreszenzanalyse bestimmte Oberflächenbereich dieser Probe mindestens in einer der Messtiefe der Röntgenfluoreszenzanalyse entsprechenden Tiefe aufgeschmolzen wird. Dabei erfolgt das Aufschmelzen des Oberflächenbereichs vorzugsweise mittels eines Laserstrahls.

Die DE 20 21 667 A1 beschreibt ein Verfahren zur Herstellung einer ein Probenmaterial umfassenden Tablette, bei dem das pulverförmige Probenmaterial mit einem Schmelzmittel vermischt, die Probenmaterial-Schmelzmittel-Mischung teilweise aufgeschmolzen und eine Erstarrung der Schmelze herbeigeführt wird, wobei die erstarrte Schmelze die Tablettenform aufweist. Ein Aufschmelzen der Probenmaterial-Schmelzmittel-Mischung erfolgt beispielsweise mittels Plasmastrahlen, Lichtbogenstrahlung oder Laserstrahlung. Eine Analyse des Probenmaterials kann mittels Röntgenfluoreszenzanalyse erfolgen.

Die DE 22 16 035 A1 offenbart ein Verfahren zur Herstellung einer ein Probenmaterial umfassenden Tablette für die Röntgenfluoreszenzanalyse, bei dem das Probenmaterial "gepulvert", dann mit einem Schmelz- bzw. Aufschlussmittel auf Boratbasis vermischt und anschließend zu einer Presstablette geformt wird. Die Presstablette wird dann in einen Graphitnapf überführt, in dem Graphitnapf in einem Ofen aufgeschmolzen und darin auch wieder zur Erstarrung gebracht, wobei die erstarrte Schmelze die Tablettenform aufweist.

Der Erfindung lag die Aufgabe zugrunde, ein verbessertes Verfahren zur Herstellung einer ein Probenmaterial umfassenden Tablette anzugeben.

Diese Aufgabe wird mittels eines Verfahrens gemäß dem Patentanspruch 1 gelöst. Ein Verfahren zur Analyse einer Materialprobe eines Probenmaterials ist Gegenstand des Patentanspruchs 13. Vorteilhafte Ausführungsformen dieser Verfahren sind Gegenstände der weiteren Patentansprüche und ergeben sich aus der nachfolgenden Beschreibung der Erfindung.

Bei einem Verfahren zur Herstellung einer ein Probenmaterial umfassenden Tablette, bei dem das Probenmaterial (vorzugsweise bis zu einer maximalen Korngröße von 100 µm, besonders bevorzugt von 63 µm) gemahlen wird, ist zum einen vorgesehen, dass das gemahlene Probenmaterial zumindest teilweise mit einem Schmelzmittel vermischt, die Probenmaterial-Schmelzmittel-Mischung zumindest teilweise aufgeschmolzen und anschließend eine Erstarrung der Schmelze in der Tablettenform herbeigeführt wird.

Durch das Aufschmelzen der Probenmaterial-Schmelzmittel-Mischung kann erreicht werden, dass diese in eine homogene Schmelze überführt wird, was eine Untersuchung des Probenmaterials anhand der wieder erstarrten Schmelze zu verbessern hilft. Dadurch können nämlich Einflüsse, die sich ansonsten aus der Korngrößenverteilung und dem mineralischen Originalzustand des Probenmaterials ergeben würden, beseitigt oder vermindert werden. Dadurch, dass die Schmelze in der Tablettenform zu der Erstarrung gebracht wird, kann die Tablette direkt nach diesem Verfahrensschritt zur Probenanalyse verwendet werden. Weitere Verfahrensschritte, die notwendig wären, um eine unkontrolliert erstarrte Schmelze in eine Tablettenform zu überführen, wie dies aus der WO 2015/000571 A1 oder der US 5,257,302 bekannt ist, können dadurch vermieden werden.

Als "Tablette" wird erfindungsgemäß ein Festkörper in einer definierten räumlichen Form verstanden, der ein das Probenmaterial umfassendes Materialgemisch aufweist.

Bei der Durchführung eines erfindungsgemäßen Verfahrens ist weiterhin vorgesehen, dass die Probenmaterial-Schmelzmittel-Mischung schichtweise, d.h. in mehreren Schichten nacheinander, aufgeschmolzen und zur Erstarrung gebracht wird. Dies kann ein relativ schnelles Erzeugen der Schmelze infolge einer exakt dosierten und sehr hohen lokalen Energieeinbringung in die Probenmaterial-Schmelzmittel-Mischung (beziehungsweise den für das Aufschmelzen vorgesehenen Anteil davon) ermöglichen.

Dabei kann besonders bevorzugt vorgesehen sein, dass das schichtweise Aufschmelzen und zur Erstarrung Bringen der Schmelzmittel-Probenmaterial-Mischung als generatives Fertigungsverfahren zur Herstellung der Tablette (oder des entsprechenden Bestandteils davon) genutzt wird. Ein generatives Fertigungsverfahren ist dadurch gekennzeichnet, dass ein räumlicher Körper aus einem insbesondere pulverförmigen Material schichtweise erzeugt wird, indem ausgehend von einer Basisschicht schichtweise Material auf diese Basisschicht aufgebracht, aufgeschmolzen und zur Erstarrung gebracht wird. Ein relevanter Vorteil eines solchen generativen Fertigungsverfahrens liegt darin, dass bedingt dadurch, dass in einer nur relativ dünnen Schicht und lokal begrenzt Material aufgeschmolzen wird, darauf verzichtet werden kann, die Schmelze während des Erstarrens in einer der vorgesehenen Form der wieder erstarrten Schmelze (d.h. in Form der Tablette oder des entsprechenden Bestandteils davon) entsprechenden Negativform aufzunehmen.

Geeignete konkrete Ausführungsformen zur Herstellung der Tablette oder eines Bestandteils davon durch ein generatives Fertigungsverfahren sind das allgemein bekannte selektive Lasersintern, das selektive Laserschmelzen und das (selektive) Elektronenstrahlschmelzen.

Ein schichtweises Aufschmelzen und zur Erstarrung Bringen kann auch dadurch erfolgen, dass zunächst eine Oberflächenschicht aufgeschmolzen und zur Erstarrung gebracht wird, und anschließend eine darunterliegende (d.h. ein bezüglich einer das Aufschmelzen bewirkenden Strahlungsquelle durch die Oberflächenschicht räumlich getrennte) Schicht aufgeschmolzen und zur Erstarrung gebracht wird. Dies kann schrittweise fortgesetzt werden, bis die vorgesehene Stärke der herzustellenden Tablette beziehungsweise des herzustellenden Bestandteils der Tablette erreicht worden ist. Dabei kann gegebenenfalls eine unterschiedliche Absorption für eine Energiestrahlung durch die Probenmaterial-Schmelzmittel-Mischung einerseits und die wieder erstarrte Schmelze andererseits ausgenutzt werden.

In einer bevorzugten Ausführungsform des erfindungsgemäßen Verfahrens kann vorgesehen sein, dass das Probenmaterial in einem ersten Mahlschritt vorgemahlen und nach dem Vermischen mit dem Schmelzmittel in einem weiteren Mahlschritt weitergemahlen wird. In diesem Fall kann das Mahlen der Probenmaterial-Schmelzmittel-Mischung primär dem Zweck dienen, das bereits gemahlene Probenmaterial mit dem Schmelzmittel optimal zu vermischen. Dies wird insbesondere dadurch ermöglicht, dass ein Schmelzmittel vielfach bereits in feinkörniger Form vorliegt. Ein Vorteil, der sich daraus ergeben kann, ist, dass sowohl das Mahlen des Probenmaterials als auch das Vermischen des Probenmaterials mit dem Schmelzmittel in derselben Vorrichtung, nämlich einer geeigneten (Fein-)Mühle, durchgeführt werden kann. Ein Bereitstellen einer zusätzlichen Mischvorrichtung kann dadurch vermieden werden. Ein weiterer Vorteil, der sich aus dem weiteren Mahlschritt ergeben kann, ist, dass eine möglicherweise heterogene Korngrößenverteilung von Probenmaterial und Schmelzmittel korrigiert werden kann.

Dementsprechend wird unter "Mahlen" erfindungsgemäß nicht zwingend ein Verfahrensschritt verstanden, bei dem eine Bearbeitung eines Materials oder Materialgemisches mit einem Erreichen einer Verkleinerung der Korngröße des Materials oder Materialgemisches verknüpft ist. Vielmehr kann ein solches "Mahlen" ausschließlich oder primär einer Durchmischung eines Materialgemisches dienen, sofern durch den gleichen Verfahrensablauf beziehungsweise durch die Verwendung derselben dabei genutzten Vorrichtung (Mühle) grundsätzlich, d.h. bei sich davon unterscheidenden Verfahrensparametern, ein Mahlen des Materials beziehungsweise Materialgemisches möglich wäre.

Gegebenenfalls kann auch vorgesehen sein, dass Schmelzmittel dosiert in Form eines Festkörpers, beispielsweise als Tablette mit einem spezifischen Gewicht, mit dem Probenmaterial zu vermischen, wodurch eine Dosierung von Probenmaterial und Schmelzmittel in einem vordefinierten Verhältnis vereinfacht werden kann. In diesem Fall kann es sinnvoll sein, den Schmelzmittel-Festkörper in zumindest einem der Mahlschritte auch zu mahlen d.h. zu Partikeln definierter (maximaler) Korngröße zu verkleinern.

In einer weiterhin bevorzugten Ausführungsform des erfindungsgemäßen Verfahrens kann vorgesehen sein, dass die Erstarrung der Schmelze derart herbeigeführt wird, dass ein glasiger Bestandteil (die wieder erstarrte Schmelze) der Tablette ausgebildet wird.

Dabei wird unter "glasig" beziehungsweise "glasiger Bestandteil" ein amorphes Materialgefüge verstanden, das nach dem Abkühlen aus der Schmelze keine kristalline Struktur aufweist. Ein Überführen der Schmelze in einen glasigen Bestandteil kann insbesondere dadurch erreicht werden, dass die Schmelze ausreichend schnell abgekühlt wird, wodurch eine Kristallisation des Schmelzmaterials verhindert wird.

Der glasige Bestandteil eignet sich besonders vorteilhaft für die Analyse des Probenmaterials, weil in diesem die homogene Mischung, die sich durch das Aufschmelzen des Probenmaterials zusammen mit dem Schmelzmittel ergibt, erhalten bleibt und dieser dabei formstabil ist.

Als bei der Durchführung des erfindungsgemäßen Verfahrens vorteilhaft verwendbares Schmelzmittel kann beispielsweise Lithiumtetra- oder -metaborat, Natriumtetra- oder -metaborat, Kaliumdisulfat und/oder eine Säure, beispielsweise Borsäure, oder ein Gemisch daraus - auch unter Zugabe von Zusatzstoffen (z.B. Fließmittel wie LiBr) - eingesetzt werden.

Weiterhin bevorzugt kann vorgesehen sein, dass das Schmelzmittel mit dem Probenmaterial in einem Verhältnis von zwischen 40:1 bis 2:1, vorzugsweise von zwischen 10:1 und 2:1, vermischt wird.

Ein Aufschmelzen der Probenmaterial-Schmelzmittel-Mischung beziehungsweise des für ein Aufschmelzen vorgesehenen Anteils davon kann vorzugsweise mittels eines Laserstrahls, eines Elektronenstrahls und/oder eines Plasmastrahls erfolgen. Dazu alternative Verfahren, die grundsätzlich auf Konduktion, Konvektion und/oder Wärmestrahlung beruhen können, können ebenfalls zur Anwendung kommen.

In einer bevorzugten Ausführungsform des erfindungsgemäßen Verfahrens kann vorgesehen sein, dass die Probenmaterial-Schmelzmittel-Mischung (gegebenenfalls nach einer Zumischung eines Bindemittels) vor dem Aufschmelzen verpresst wird. Dies kann insbesondere vorteilhaft sein, wenn nicht vorgesehen ist, die gesamte Tablette in Form einer wieder erstarrten Schmelze auszubilden und somit nicht die gesamte Probenmaterial-Schmelzmittel-Mischung aufgeschmolzen werden soll. Somit kann insbesondere vorgesehen sein, die Tablette grundsätzlich in Form einer Presstablette auszubilden, während lediglich eine primär für die spätere Analyse vorgesehene Oberflächenschicht aufgeschmolzen und wieder zur Erstarrung gebracht wird, um die Analyse durch die vorzugsweise zu erhaltende glasige und damit amorphe Struktur sowie eine Homogenisierung des Probenmaterials in dieser Oberflächenschicht entsprechend zu verbessern. Dabei kann die Oberflächenschicht vorteilhafterweise eine Stärke von zwischen 30 µm und 300 µm aufweisen.

Die Probenmaterial-Schmelzmittel-Mischung kann vorzugsweise in einem Formring verpresst werden. Der Formring kann dabei zumindest umfangsseitig die Negativform zu der vorgesehenen Tablettenform darstellen. Vorteilhafterweise kann der Formring zumindest teilweise aus Edelstahl oder einem Refraktärmetall mit geringem thermischem Ausdehnungskoeffizienten bestehen.

In einer weiterhin bevorzugten Ausführungsform des erfindungsgemäßen Verfahrens kann vorgesehen sein, dass ein Dekontaminierungsmittel in einer Mühle gemahlen und anschließend das mit dem Schmelzmittel zu vermischende Probenmaterial in derselben Mühle gemahlen wird. Dies kann dazu dienen, die Mühle, die gegebenenfalls zuvor schon für ein Mahlen eines andersartigen Probenmaterials genutzt wurde, zu dekontaminieren beziehungsweise gezielt mit dem anschließend zu mahlenden Probenmaterial zu kontaminieren. Dadurch kann eine Kontaminierung des Probenmaterials, die zu einer Verfälschung des Ergebnisses einer sich anschließenden Analyse dieses Probenmaterials führen könnte, möglichst ausgeschlossen werden.

Das Dekontaminierungsmittel kann vorzugsweise eine erste Teilmenge des Probenmaterials sein oder zumindest umfassen. Alternativ oder zusätzlich dazu kann das Dekontaminierungsmittel jedoch auch ein probenmaterialfremdes Material, wie insbesondere Sand, Korund und/oder ein beliebiges feuerfestes Material (auch schamottehaltiges Material) sein oder umfassen.

In einer Ausführungsform des erfindungsgemäßen Verfahrens kann vorgesehen sein, dass das gemahlene Dekontaminierungsmittel verworfen wird, so dass es zumindest nicht weiter im Rahmen des erfindungsgemäßen Verfahrens genutzt wird. Dabei kann insbesondere vorgesehen sein, dass das Dekontaminierungsmittel entsorgt wird.

Möglich ist auch, dass das gemahlene Dekontaminierungsmittel verpresst und als Tragschicht für die Probenmaterial-Schmelzmittel-Mischung genutzt wird. In diesem Fall kann eine Auswahl des Dekontaminierungsmittels (oder zumindest eines Bestandteils davon) auch anhand einer Eignung als Tragschicht erfolgen. Ein Verpressen des Dekontaminierungsmittels kann vorzugsweise in einem Formring erfolgen, dessen Höhe größer, vorzugsweise mindestens doppelt so groß wie die Schichtstärke der Tragschicht ist. Die Einheit aus Tragschicht und Formring kann dann als gefäßartige Negativform (zu der vorgesehenen Tablettenform) für die anschließend darin einzubringende Probenmaterial-Schmelzmittel-Mischung dienen, die darin auch weiterbearbeitet, insbesondere verpresst und/oder aufgeschmolzen werden kann.

Um einen sicheren Halt der Presstablette innerhalb des Formring zu gewährleisten kann vorzugsweise vorgesehen sein, dass dieser mindestens eine innenseitige Vertiefung ausbildet, in die Probenmaterial und/oder Dekontaminierungsmittel beim jeweiligen Verpressen eindringen kann, wodurch sich eine formschlüssige Verbindung zwischen der Presstablette und dem Formring ausbilden kann.

Die Erfindung betrifft weiterhin ein Verfahren zur Analyse einer Materialprobe eines Probenmaterials, wobei mittels eines erfindungsgemäßen Verfahrens eine das Probenmaterial umfassende Tablette hergestellt und daran anschließend eine Analyse des Probenmaterials anhand der Tablette durchgeführt wird. Bei der Analyse des Probenmaterials kann insbesondere eine Röntgenfluoreszenzanalyse durchgeführt werden.

Bei dem Probenmaterial kann sich insbesondere um ein oder mehrere natürliche Gesteine, wie beispielsweise Silikate, Karbonate, Sulfate, Sulfide, Salze, Phosphate, und/oder Oxide handeln. Weiterhin kann das Probenmaterial insbesondere industrielle Prozessprodukte, wie beispielsweise Schlacke, Flugasche, Legierungen und/oder andere Metallverbindungen, umfassen.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand von in den Zeichnungen dargestellten Ausführungsbeispielen näher erläutert. In den Zeichnungen zeigt
- Fig. 1:: schematisch eine mittels einer ersten Ausführungsform eines erfindungsgemäßen Verfahrens hergestellte Tablette;
- Fig. 2:: schematisch eine mittels einer zweiten Ausführungsform eines erfindungsgemäßen Verfahrens hergestellte Tablette; und
- Fig. 3:: schematisch die Durchführung eines erfindungsgemäßen Verfahrens in einer dritten Ausführungsform und eine dabei genutzte Vorrichtung.

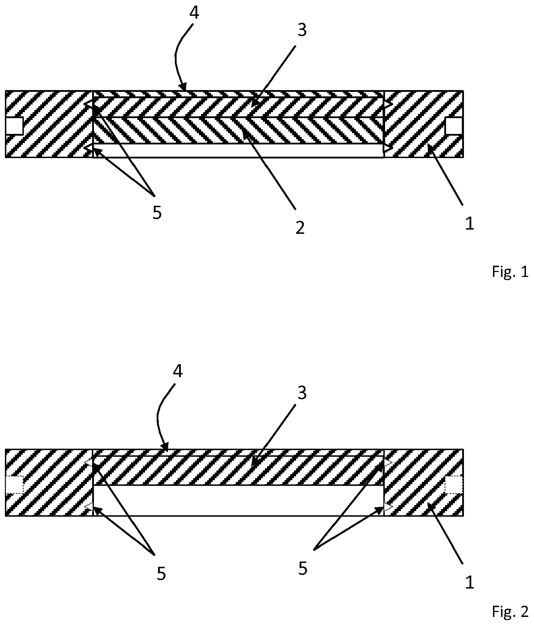

Die Fig. 1 zeigt eine ein Probenmaterial umfassende Tablette, die mittels einer ersten Ausführungsform eines erfindungsgemäßen Verfahrens hergestellt wurde. Bei dieser Ausführungsform eines erfindungsgemäßen Verfahrens wird zunächst eine erste Teilmenge (z.B. 5 bis 6 g) des aufzubereitenden und zu analysierenden Probenmaterials in eine Feinmühle (nicht dargestellt) dosiert und dort als Spülbeziehungsweise Vorprobe gemahlen. Hierdurch wird die Feinmühle gezielt mit dem aufzubereitenden Probenmaterial kontaminiert. Diese erste Teilmenge des Probenmaterials dient somit als Dekontaminierungsmittel.

Die als Dekontaminierungsmittel genutzte Teilmenge des Probenmaterials wird nach dem Mahlen in der Feinmühle mittels einer Tablettenpresse (nicht dargestellt) in einen Formring 1 aus beispielsweise Edelstahl gepresst (vgl. Fig. 1), um eine Tragschicht 2 für eine weitere Schicht 3 aus einer Mischung einer zweiten Teilmenge des Probenmaterials und einem Schmelzmittel auszubilden. Diese weitere Schicht 3 beziehungsweise ein Bestandteil davon dient einer nachträglichen Analyse des Probenmaterials. Die Tragschicht 2 ist dafür infolge einer möglichen Kontaminierung durch in der Feinmühle enthaltene Verunreinigungen nicht geeignet. Für die Tragschicht 2 kann beispielsweise eine Schichtstärke von drei bis vier Millimetern vorgesehen sein. Diese Schichtstärke kann ca. 50% der Höhe des Formrings 1 entsprechen. Nach einer Reinigung des Formrings 1 und der Tragschicht 2 wird die aus diesen beiden Komponenten ausgebildete Einheit um 180° (bezüglich einer Radialachse) gewendet, so dass diese Einheit ein nach oben geöffnetes Gefäß ausbildet, in das die weitere Teilmenge des Probenmaterials eingebracht werden kann.

Anschließend wird die weitere Teilmenge des Probenmaterials in die Feinmühle dosiert und dort in einem ersten Mahlschritt gemahlen. Die Drehzahl, mit der die Feinmühle betrieben wird, und die Mahldauer können dabei in Abhängigkeit von dem zu bearbeitenden Probenmaterial eingestellt werden. Nach dem Abschluss des ersten Mahlschritts wird ein Schmelzmittel (z.B. Lithiumtetraborat) gemäß einem vorgegebenen Mischungsverhältnis in diese gemahlene Teilmenge des Probenmaterials gemischt (z.B. mit einem Mischungsverhältnis von 1:5, d.h. bei einer Menge der weiteren Teilmenge des Probenmaterials von 2 g eine Menge des / Schmelzmittels von 10 g). Anschließend wird diese Probenmaterial-Schmelzmittel-Mischung in einem zweiten Mahlschritt in der Feinmühle gemahlen und dabei möglichst optimal durchgemischt. Die Probenmaterial-Schmelzmittel-Mischung wird dann in das von dem Formring 1 und der Tragschicht 2 ausgebildete Gefäß eingebracht und in der Tablettenpresse verpresst. Die so entstandene Presstablette besteht zunächst aus zwei Schichten, nämlich der Tragschicht 2 aus der gegebenenfalls kontaminierten ersten Teilmenge des Probenmaterials sowie aus der weiteren, bei der sich anschließenden Analyse zu berücksichtigenden Schicht 3, die aus der verpresstem Probenmaterial-Schmelzmittel-Mischung besteht.

Die freie Oberfläche dieser weiteren Schicht 3 wird anschließend mittels eines Lasers (in der Fig. 1 nicht dargestellt) bestrahlt und dabei aufgeschmolzen. Die entsprechende Oberfläche wird dabei vollständig oder in kleinen Abschnitten mittels kontinuierlicher oder gepulster Laserstrahlung (z.B. mittels eines Faserlasers) umgeschmolzen beziehungsweise aufgeschlossen. Nach einem Erstarren dieser Schmelze durch Abkühlen umfasst die herzustellende Tablette eine glasige Schicht 4, die durch ein sehr homogenes Materialgefüge gekennzeichnet ist. Diese glasige Schicht 4 eignet sich in vorteilhafter Weise für eine anschließende Analyse des Probenmaterials in beispielsweise einem Röntgenfluoreszenzanalysator (nicht dargestellt).

Bei einer möglichen Variante wird mit dem Laserstrahl Punkt für Punkt (Fläche für Fläche) der Oberfläche der weiteren Schicht 3 abgerastert. Dabei werden sehr kleine "Schmelzpfützen" erzeugt, die kurze Zeit später wieder glasig erstarren. Durch den fließenden Prozess infolge des Verfahrens des Lasers wird die gesamte Oberfläche homogen aufgeschlossen und zu einer glasigen Schicht 4 umgewandelt.

Der Sinn des Schmelzaufschlusses ist es, das Probenmaterial zusammen mit einem Schmelzmittel in eine homogene Schmelze zu überführen, die beim Abkühlen glasig erstarrt. Durch den Aufschluss werden Einflüsse auf die Intensität der Fluoreszenzstrahlung im Rahmen der Röntgenfluoreszenzanalyse beseitigt oder zumindest verringert, die durch die Korngrößenverteilung und den mineralogischen Originalzustand des Probenmaterials begründet sind. Der Aufschluss führt zu einer einheitlichen Bindungsform der Elemente und mindert durch Verdünnung die gegenseitige Beeinflussung der Elemente durch Sekundäranregung und Absorption.

Das Umschmelzen ist ein chemischer Vorgang. Das Schmelzmittel zersetzt dabei die Verbindungen des Probenmaterials und wandelt diese chemisch um. Aus Silikaten, Aluminaten, Carbonaten und Sulfaten des Probenmaterials (soweit vorhanden) werden so beispielsweise Borate. Durch ein Umschmelzen beziehungsweise Aufschmelzen von beispielsweise Fe₂O₃, Fe₃O₄, FeO, FeCl₂, FeS₂, FeCO₃ mit Tetraborat entstehen Fe-Borate. Durch Umwandlung in Fe-Borate werden die Einflüsse der chemischen Bindung minimiert.

In einer alternativen Ausführungsform des zuvor beschriebenen Verfahrens zur Herstellung einer ein Probenmaterial umfassenden Tablette (gemäß der Fig. 2) ist vorgesehen, dass keine Tragschicht 2 erzeugt wird. Vielmehr wird eine Presstablette ausschließlich aus der Probenmaterial-Schmelzmittel-Mischung ausgebildet. Dazu wird zunächst wieder eine erste Teilmenge des Probenmaterials als Spülprobe beziehungsweise Dekontaminierungsmittel gemahlen, anschließend jedoch verworfen. Nach der erfolgten Dekontaminierung der Mühle wird wiederum eine zweite Teilmenge des Probenmaterials (z.B. 2 g) in zwei Mahlschritten aufbereitet. Im ersten Mahlvorgang wird lediglich diese zweite Teilmenge des Probenmaterials gemahlen. Für den zweiten Mahlschritt wird dann in einem möglichst exakten Verhältnis von beispielsweise 1:5 (Probenmaterial zu Schmelzmittel) ein Schmelzmittel hinzugegeben und gemeinsam mit dem Probenmaterial gemahlen, um eine möglichst optimale Durchmischung dieser Komponenten zu erreichen. Die Mischung aus dem Probenmaterial und dem Schmelzmittel wird dann in eine Tablettenpresse (nicht dargestellt) überführt. Dort wird die Mischung zu einer der Form der herzustellenden Tablette im Wesentlichen entsprechenden Schicht 3 gepresst. Anschließend kann das Aufschmelzen und das Erstarren Lassen einer Oberflächenschicht der Presstablette entsprechend der zuvor beschriebenen Ausführungsform eines erfindungsgemäßen Verfahrens durchgeführt werden, um eine glasige Schicht 4 auszubilden.

Der im Rahmen der Durchführung der zuvor beschriebenen Verfahren genutzte Formring 1 weist an seiner Innenseite zwei umlaufende V-förmige (oder auch ovale) Vertiefungen 5 auf. Dabei befindet sich eine der Vertiefungen 5 in der oberen axialen Hälfte und die andere Vertiefung 5 in der unteren axialen Hälfte des Formrings 1. Der Formring 1 weist beispielsweise eine (axiale) Höhe von 8,5 mm auf. Eine der Vertiefungen 5 befindet sich ausgehend von einem der axialen Enden des Formrings 1 beispielsweise auf einer axialen Höhe von 2,5 mm und die andere Vertiefung (ausgehend von demselben axialen Ende des Formrings 1) auf einer axialen Höhe von 6 mm.

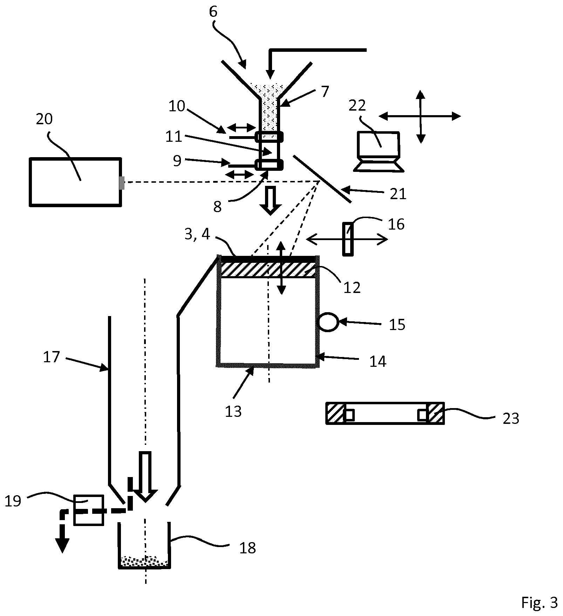

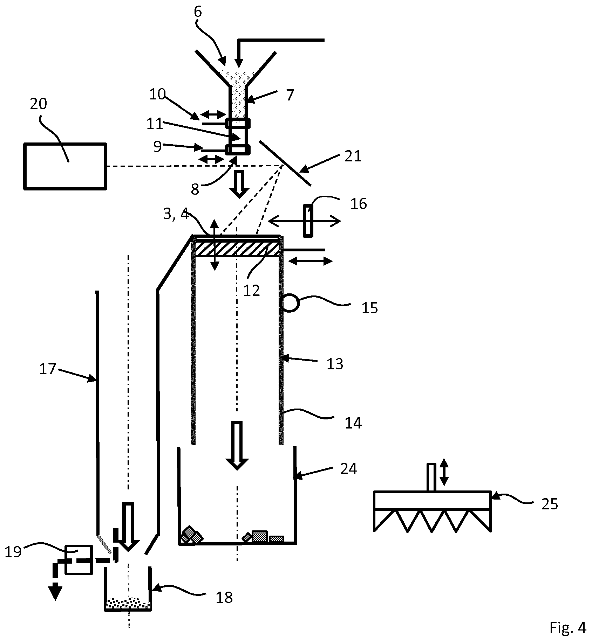

Die Fig. 3 zeigt schematisch die Durchführung eines erfindungsgemäßen Verfahrens in einer dritten Ausführungsform sowie eine bei der Durchführung dieses Verfahrens genutzte Vorrichtung.

Diese Ausführungsform eines erfindungsgemäßen Verfahrens lehnt sich an die Methode des selektiven Laserschmelzens (SLM) an. Das dabei verarbeitete Pulver besteht aus einer Mischung aus einem Probenmaterial und einem Schmelzmittel. Dieses Pulver wird entsprechend dem Vorgehen bei den beiden zuvor beschriebenen Ausführungsformen erfindungsgemäßer Verfahren aufbereitet, d.h. nach einer möglichen Dekontaminierung einer Feinmühle (nicht dargestellt) wird eine Teilmenge des Probenmaterials in einem ersten Mahlschritt in der Feinmühle gemahlen, darauf folgend mit dem Schmelzmittel vermischt und anschließend die Probenmaterial-Schmelzmittel-Mischung in einem zweiten Mahlschritt in der Feinmühle durchmischt.

Anschließend wird eine ausreichende Menge der Probenmaterial-Schmelzmittel-Mischung über einen Einlass 6 einem Dosierer 7 der für die Durchführung dieser Ausführungsform eines erfindungsgemäßen Verfahrens genutzten Vorrichtung zugeführt und hier bevorratet. Im Bereich eines Auslasses 8 umfasst der Dosierer 7 zwei parallel zueinander beabstandete Dosierschieber 9, 10, die in bekannter Weise eine Separierung eines definierten Volumens der Probenmaterial-Schmelzmittel-Mischung von der in dem Dosierer 7 vorgehaltenen Gesamtmenge der Probenmaterial-Schmelzmittel-Mischung ermöglichen, indem bei geschlossenem unterem Dosierschieber 9 der obere Dosierschieber 10 geöffnet wird, so dass Probenmaterial-Schmelzmittel-Mischung in den zwischen den Dosierschiebern 9, 10 ausgebildeten Dosierraum 11 fallen kann. Durch ein Schließen des oberen Dosierschiebers 10 wird dann eine dem Volumen des Dosierraums 11 entsprechende Teilmenge der Probenmaterial-Schmelzmittel-Mischung von der in dem Dosierer 7 vorgehaltenen Restmenge der Probenmaterial-Schmelzmittel-Mischung separiert. Diese separierte Teilmenge kann dann durch ein Öffnen des unteren Dosierschiebers 9 aus dem Dosierer 7 ausgebracht werden.

Eine derart ausgebrachte Teilmenge der Probenmaterial-Schmelzmittel-Mischung fällt auf einen Teller 12 einer unter dem Dosierer 7 angeordneten Aufnahmevorrichtung 13. Der Teller 12 ist innerhalb einer Führung 14 dieser Aufnahmevorrichtung 13 in vertikaler Richtung verfahrbar. Die Aufnahmevorrichtung 13 umfasst weiterhin einen Vibrator 15, mittels dem die Aufnahmevorrichtung 13 in Schwingung versetzt werden kann. Dies dient einer Auflockerung der auf dem Teller 12 aufliegenden Teilmenge der Probenmaterial-Schmelzmittel-Mischung sowie einer ersten flächigen Verteilung dieser Teilmenge auf dem Teller 12.

Anschließend wird mittels eines Verteilschiebers 16 die Probenmaterial-Schmelzmittel-Mischung in einer möglichst gleichmäßig starken Schicht auf dem Teller 12 verteilt und dabei überschüssige Probenmaterial-Schmelzmittel-Mischung über einen Probenverwurf 17 in einen Probenbecher 18 geleitet. Diese überschüssige Probenmaterial-Schmelzmittel-Mischung kann zur Wiederverwendung aus dem Probenbecher 18 zurück in den Dosierer 7 gefördert werden. Dazu kann der Probenbecher 18 mittels einer automatischen Handhabungsvorrichtung, wie beispielsweise einem Roboter (nicht dargestellt), entnommen und zu dem Einlass 6 des Dosierers 7 bewegt werden. Alternativ kann auch vorgesehen sein, dass die überschüssige Probenmaterial-Schmelzmittel-Mischung aus dem Probenbecher 18 entfernt, beispielsweise mittels einer Absaugvorrichtung 19 abgesaugt, und anschließend gegebenenfalls entsorgt wird.

Die geglättet auf dem Teller 12 der Aufnahmevorrichtung 13 aufliegende Schicht der Probenmaterial-Schmelzmittel-Mischung wird anschließend mittels eines Lasers 20 bestrahlt und dabei selektiv aufgeschmolzen. Hierzu ist ein automatisiert schwenkbarer Spiegel 21 vorgesehen, durch dessen Schwenkbewegung ermöglicht wird, einen definierten Bereich der Schicht der Probenmaterial-Schmelzmittel-Mischung mittels eines durch den Laser 20 erzeugten Laserstrahls zu bestrahlen und dadurch aufzuschmelzen. Nach einem Erstarren der so erzeugten Schmelze entsteht eine glasige Schicht. Vorgesehen ist, schichtweise eine Mehrzahl solcher glasigen Schichten übereinander auszubilden, indem aufeinanderfolgend jeweils ein Aufbringen einer dosierten Teilmenge der Probenmaterial-Schmelzmittel-Mischung auf den Teller 12 der Aufnahmevorrichtung 13, ein Verteilen beziehungsweise Glätten dieser Teilmenge und ein Aufschmelzen und Erstarren Lassen dieser Teilmenge durchgeführt werden, wobei für jeden Zyklus der Teller 12 um eine Distanz, die der vorgesehenen Schichtstärke der auszubildenden glasigen Schicht im Wesentlichen entspricht, nach unten verfahren wird.

Die so erzeugten glasigen Schichten können dann noch optional auf eine Tragschicht (nicht dargestellt) aufgebracht werden, um die Formstabilität der herzustellenden Tablette zu erhöhen.

Mittels einer Transportvorrichtung 22, beispielsweise einem Sauggreifelement, kann/können die Tablette beziehungsweise die glasigen Schichten dann aus der Aufnahmevorrichtung 13 entnommen und in einen (nicht dargestellten) Analysator , beispielsweise einen Röntgenfluoreszenzanalysator, überführt werden. Gegebenenfalls kann auch vorgesehen sein, die so erzeugten glasigen Schichten (gegebenenfalls in Verbindung mit der Tragschicht) zuvor in einen Probenträger 23 einzusetzen, um die Handhabbarkeit der erzeugten Tablette im Rahmen der Analyse zu verbessern.

Grundsätzlich in allen erfindungsgemäßen Verfahren und so auch bei den oben beschriebenen Ausführungsformen erfindungsgemäßer Verfahren können vorteilhafterweise zusätzliche Verfahrensschritte durchgeführt werden, die insbesondere der Sicherstellung einer hinreichenden Qualität der herzustellenden Tablette dienen. Dabei kann insbesondere vorgesehen sein, dass das Aufschmelzen der Probenmaterial-Schmelzmittel-Mischung und das wieder Erstarren Lassen der Schmelze regelmäßig oder kontinuierlich überwacht werden nun, insbesondere mittels einer Messung der Temperatur der Schmelze, beispielsweise mittels eines Pyrometers (nicht dargestellt), einer Überwachung der Wärmeverteilung der Schmelze, beispielsweise mittels einer Wärmebildkamera (nicht dargestellt) und entsprechender Bildverarbeitungssoftware. Ebenso kann eine Beobachtung des Schmelzvorganges mittels einer Kamera (insbesondere CMOS; nicht dargestellt) erfolgen. Ebenfalls mittels einer Kamera (nicht dargestellt) kann auch eine Überwachung der Ausbildung der glasigen Schicht beziehungsweise eine Qualitätsprüfung des dabei ausgebildeten Glases durchgeführt werden. Einige oder sämtliche dieser Schritte können vorteilhafterweise auch in einer Ausgestaltung als Fernüberwachung (Online-System) ausgebildet sein. Eine solche Fernüberwachung kann gleichzeitig auch eine entsprechende Fernsteuerung der Temperaturregelung beziehungsweise der durch die verwendete Wärmequelle in die Probenmaterial-Schmelzmittel-Mischung eingebrachten Wärmeenergie umfassen.

### Bezugszeichen:

- 1: Formring
- 2: Tragschicht
- 3: Schicht aus einer Probenmaterial-Schmelzmittel-Mischung
- 4: glasige Schicht
- 5: Vertiefung
- 6: Einlass des Dosierers
- 7: Dosierer
- 8: Auslass des Dosierers
- 9: unterer Dosierschieber
- 10: oberer Dosierschieber
- 11: Dosierraum
- 12: Teller der Aufnahmevorrichtung
- 13: Aufnahmevorrichtung
- 14: Führung der Aufnahmevorrichtung
- 15: Vibrator
- 16: Verteilschiebers
- 17: Probenverwurf
- 18: Probenbecher
- 19: Absaugvorrichtung
- 20: Laser
- 21: Spiegel
- 22: Transportvorrichtung
- 23: Probenträger

## Patentansprüche

1. Verfahren zur Herstellung einer ein Probenmaterial umfassenden Tablette , wobei das Probenmaterial gemahlen, das gemahlene Probenmaterial zumindest teilweise mit einem Schmelzmittel vermischt, die Probenmaterial-Schmelzmittel-Mischung zumindest teilweise aufgeschmolzen und anschließend eine Erstarrung der Schmelze in der Tablettenform herbeigeführt wird, **dadurch gekennzeichnet, dass** die Probenmaterial-Schmelzmittel-Mischung in mehreren Schichten nacheinander aufgeschmolzen und zur Erstarrung gebracht wird.

2. Verfahren gemäß Anspruch 1, **dadurch gekennzeichnet, dass** das Probenmaterial in einem ersten Mahlschritt vorgemahlen und nach dem Vermischen mit dem Schmelzmittel in einem weiteren Mahlschritt weitergemahlen wird.

3. Verfahren gemäß Anspruch 1 oder 2, **dadurch gekennzeichnet, dass** die Erstarrung derart herbeigeführt wird, dass ein glasiger Bestandteil der Tablette ausgebildet wird.

4. Verfahren gemäß einem der vorhergehenden Ansprüche, **dadurch gekennzeichnet, dass** als Schmelzmittel beispielsweise Lithiumtetraborat, Natriumtetraborat und/oder eine Säure, beispielsweise Borsäure, eingesetzt wird.

5. Verfahren gemäß einem der vorhergehenden Ansprüche, **dadurch gekennzeichnet, dass** die Probenmaterial-Schmelzmittel-Mischung vor dem Aufschmelzen verpresst wird.

6. Verfahren gemäß Anspruch 5, **dadurch gekennzeichnet, dass** die verpresste Probenmaterial-Schmelzmittel-Mischung lediglich in einer Oberflächenschicht aufgeschmolzen wird.

7. Verfahren gemäß einem Ansprüche 5 oder 6, **dadurch gekennzeichnet, dass** ein Dekontaminierungsmittel in einer Mühle gemahlen und anschließend das mit dem Schmelzmittel zu vermischende Probenmaterial in derselben Mühle gemahlen wird.

8. Verfahren gemäß Anspruch 7, **dadurch gekennzeichnet, dass** das Dekontaminierungsmittel eine erste Teilmenge des Probenmaterials umfasst.

9. Verfahren gemäß Anspruch 7 oder 8, **dadurch gekennzeichnet, dass** das Dekontaminierungsmittel ein probenmaterialfremdes Material umfasst.

10. Verfahren gemäß einem der Ansprüche 7 bis 9, **dadurch gekennzeichnet, dass** das gemahlene Dekontaminierungsmittel verpresst und als Tragschicht für die Probenmaterial-Schmelzmittel-Mischung genutzt wird.

11. Verfahren gemäß einem der vorhergehenden Ansprüche, **dadurch gekennzeichnet, dass** die Probenmaterial-Schmelzmittel-Mischung und/oder das Dekontaminierungsmittel in einem Formring verpresst wird, der mindestens eine innenseitige Vertiefung zur Aufnahme von verpresstem Probenmaterial und/oder verpresstem Dekontaminierungsmittel ausbildet.

12. Verfahren gemäß einem der vorhergehenden Ansprüche, **dadurch gekennzeichnet, dass** das Aufschmelzen insbesondere selektiv mittels eines Laserstrahls, eines Elektronenstrahls und/oder mittels eines Plasmastrahls erfolgt.

13. Verfahren zur Analyse eines Probenmaterials, **gekennzeichnet durch** die Herstellung einer das Probenmaterial umfassende Tablette gemäß einem der vorhergehenden Ansprüche und die sich daran anschließende Analyse des Probenmaterials anhand der Tablette.

14. Verfahren gemäß Anspruch 13, **gekennzeichnet durch** eine Röntgenfluoreszenzanalyse.

## Claims

1. Method of producing a tablet comprising a sample material, where the sample material is ground, the ground sample material is at least partly mixed with a fluxing agent, the sample material/fluxing agent mixture is at least partly melted and then solidification of the melt in tablet form is induced, **characterized in that** the sample material/fluxing agent mixture is successively melted and solidified in a plurality of layers.

2. Method according to Claim 1, **characterized in that** the sample material is subjected to preliminary grinding in a first grinding step and, after being mixed with the fluxing agent, to further grinding in a further grinding step.

3. Method according to Claim 1 or 2, **characterized in that** the solidification is brought about by forming a vitreous constituent of the tablet.

4. Method according to any of the preceding claims, **characterized in that** the fluxing agent used is, for example, lithium tetraborate, sodium tetraborate and/or an acid, for example boric acid.

5. Method according to any of the preceding claims, **characterized in that** the sample material/fluxing agent mixture is compressed before being melted.

6. Method according to Claim 5, **characterized in that** the compressed sample material/fluxing agent mixture is melted only in a surface layer.

7. Method according to one of Claims 5 or 6, **characterized in that** a decontaminating agent is ground in a mill and then the sample material to be mixed with the fluxing agent is ground in the same mill.

8. Method according to Claim 7, **characterized in that** the decontaminating agent comprises a first portion of the sample material.

9. Method according to Claim 7 or 8, **characterized in that** the decontaminating agent comprises a material other than the sample material.

10. Method according to any of Claims 7 to 9, **characterized in that** the ground decontaminating agent is compressed and utilized as base layer for the sample material/fluxing agent mixture.

11. Method according to any of the preceding claims, **characterized in that** the sample material/fluxing agent mixture and/or the decontaminating agent is compressed in a mold ring that forms at least one depression on the inside to accommodate compressed sample material and/or compressed decontaminating agent.

12. Method according to any of the preceding claims, **characterized in that** the melting is especially effected selectively by means of a laser beam, an electron beam and/or by means of a plasma jet.

13. Method of analyzing a sample material, **characterized by** the production of a tablet comprising the sample material according to any of the preceding claims and the subsequent analysis of the sample material using the tablet.

14. Method according to Claim 13, **characterized by** an x-ray fluorescence analysis.

## Revendications

1. Procédé de fabrication d'une pastille comprenant un matériau échantillon, le matériau échantillon étant broyé, le matériau échantillon broyé étant mélangé au moins en partie à un fondant, le mélange matériau échantillon - fondant étant fondu au moins en partie et une solidification du fondant est ensuite mise en oeuvre sous la forme de pastilles, **caractérisé en ce que** le mélange matériau échantillon-fondant est fondu en plusieurs couches les unes derrière les autres et porté à solidification.

2. Procédé selon la revendication 1, **caractérisé en ce que** le matériau échantillon est prébroyé dans une première étape de broyage et est rebroyé dans une autre étape de broyage après le mélange avec le fondant.

3. Procédé selon la revendication 1 ou 2, **caractérisé en ce que** la solidification est provoquée de telle sorte qu'un composant vitreux de la pastille est constitué.

4. Procédé selon l'une quelconque des revendications précédentes, **caractérisé en ce que** par exemple du tétraborate de lithium, du tétraborate de sodium et/ou un acide, par exemple de l'acide borique, est utilisé en tant que fondant.

5. Procédé selon l'une quelconque des revendications précédentes, **caractérisé en ce que** le mélange matériau échantillon-fondant est comprimé avant la fusion.

6. Procédé selon la revendication 5, **caractérisé en ce que** le mélange matériau échantillon-fondant n'est fondu qu'en une couche superficielle.

7. Procédé selon l'une quelconque des revendications 5 ou 6, **caractérisé en ce qu'**un agent de décontamination est broyé dans un moulin et le matériau échantillon à mélanger avec le fondant est ensuite broyé dans le même moulin.

8. Procédé selon la revendication 7, **caractérisé en ce que** l'agent de décontamination comprend une première quantité partielle du matériau échantillon.

9. Procédé selon la revendication 7 ou 8, **caractérisé en ce que** l'agent de décontamination comprend un matériau étranger au matériau échantillon.

10. Procédé selon l'une quelconque des revendications 7 à 9, **caractérisé en ce que** l'agent de décontamination broyé est comprimé et est utilisé en tant que couche porteuse pour le mélange matériau échantillon-fondant.

11. Procédé selon l'une quelconque des revendications précédentes, **caractérisé en ce que** le mélange matériau échantillon - fondant et/ou l'agent de décontamination est comprimé dans une bague de moulage, qui constitue au moins une cavité du côté intérieur pour recevoir du matériau échantillon comprimé et/ou de l'agent de décontamination comprimé.

12. Procédé selon l'une quelconque des revendications précédentes, **caractérisé en ce que** la fusion a lieu notamment de façon sélective au moyen d'un rayon laser, d'un faisceau d'électrons et/ou au moyen d'un jet de plasma.

13. Procédé pour analyse d'un matériau échantillon, **caractérisé par** la fabrication d'une pastille comprenant le matériau échantillon selon l'une quelconque des revendications précédentes et l'analyse s'y rattachant du matériau échantillon à l'aide de la pastille.

14. Procédé selon la revendication 13, **caractérisé par** une analyse fluoroscopique.
